# EUROPEAN PATENT SPECIFICATION

(11) **EP 1 145 454 B1**
(45) Date of publication and mention of the grant of the patent: **24.01.2007**
(21) Application number: 00966574.6
(22) Date of filing: 04.10.2000
(51) Int. Cl.: H04B 1/66

(54) **APPARATUS AND METHOD FOR COMPENSATING RF GAIN BASED ON MEASURED RF NOISE**
SCHALTUNG UND VERFAHREN ZUR AUF GEMESSENEN HF-RAUSCHEN BASIERTE HF-VERSTÄRKUNGSKOMPENSIERUNG
APPAREIL ET PROCEDE PERMETTANT DE COMPENSER UN GAIN RF D'APRES UN BRUIT RF MESURE

(30) Priority: 04.10.1999 KR 9942582
(43) Date of publication of application: 17.10.2001
(73) Proprietor: SK Telecom Co., Ltd., Jongro-ku, Seoul 110-110 (KR)
(72) Inventor: SEO, Sang-Hoon, Seongnam-shi, Kyoungki-do 463-480 (KR); CHEONG, Jong-Min, Yongin-shi, Kyoungki-do 449-840 (KR); KANG, Chan-Koo, Seongnam-shi, Kyoungki-do 463-010 (KR); LEE, Jin-Ick, Seongnam-shi, Kyoungki-do 463-020 (KR); PARK, Sun, 103-905 Sannaedeul Hyundai Apt., Yongin-shi, Kyoungki-do 449-840 (KR)
(74) Representative: Mounteney, Simon James
(86) International application number: PCT/KR2000/001106
(87) International publication number: WO 2001/026240

(56) References cited:
- WO-A-91/17606
- WO-A-96/33555
- JP-A- 10 065 750
- KR-A- 95 022 199
- KR-A- 98 046 100
- US-A- 3 835 393
- US-A- 4 731 873
- US-A- 5 903 818
- KISUK YOO: "A constant gain radio transmitter for temperature and the different levels of input signal" VEHICULAR TECHNOLOGY CONFERENCE, 1997, IEEE 47TH PHOENIX, AZ, USA 4-7 MAY 1997, NEW YORK, NY, USA,IEEE, US, 4 May 1997 (1997-05-04), pages 691-694, XP010228931 ISBN: 0-7803-3659-3

## Description

### Technical Field

The present invention relates to an apparatus and method for compensating a gain of a radio frequency (RF) signal based on measured RF noise; and, more particularly, to an apparatus and method for compensating a gain of a RF signal based on an out of band RF noise in order to keep a path gain of the RF signal module, and a computer readable recording media storing instructions for executing the same method.

### Background Art

In a gain compensation method, for compensating a gain of a RF module, an automatic loop control (ALC) and an automatic gain control (AGC) are generally used. A signal level is extracted from a received signal by a directional coupler, a power divider, etc., and an output signal is compensated based on comparison result between the extracted signal level and a reference level. In other words, when utilizing the ALC and the AGC, the gain of the signal is compensated for keeping a level of an output signal as a constant value.

In another conventional compensation method, the gain of the signal is compensated based on variation of a tone signal which is located at an outside of the frequency band of the signal. Hereinafter, the frequency band of the signal is referred to as "signal band". Here, out of signal band means the outside of the signal band and unused frequency band in the signal band.

In case that a gain compensation is performed based on an in-band signal, since a level of the signal is varied in accordance with a location of a signal source, it is difficult to keep the gain of the RF module as a constant value, which is referred to as a "loop control".

In case that the gain compensation is performed based on an out-of-band signal, e.g., the tone signal, the loop control can be performed. However, it is necessary an additional signal source, and therefore, the system is to be complicated.

Disadvantages in that the gain compensation is performed based on the in-band signal will be described in detail.

In most of communication systems, the AGC is performed based on the signal level in a signal transmission path. However, when a power control is necessary, the AGC cannot be used. For example, in a code division multiple access (CDMA) system, a terminal controls a power so that a received power level of the terminal is kept as a constant value. However, the received power level is fluctuated because of a fading, etc. In this environment, if the AGC is performed, it is not appreciated that the power control of the CDMA system is performed in normal.

In other words, since the AGC and the ALC are functions for compensating the gain of the signal and keeping the power of the output signal as the constant value, there is a problem in that it is difficult to keep the gain of the RF module.

WO 91/17606 discloses a mechanism for automatic gain control in a receiver that determines the difference in power between a desired signal and a received signal and provides open loop gain control to reduce saturation and noise.

### Summary of the Invention

Therefore, it is an object of the present invention to provide an apparatus and method for compensating a gain of a RF module based on a noise signal located out of a signal band.

In accordance with an aspect of the present invention, there is provided an apparatus as set out in Claim 1. Preferred features of this aspect are set out in Claims 2 to 4.

In accordance with another aspect of the present invention, there is provided a method as set out in Claim 5.

In accordance with another aspect of the present invention, there is provided a computer readable recording medium as set out in Claim 6.

### Brief Description of the Drawings

The above and other objects and features of the instant invention will become apparent from the following description of preferred embodiments taken in conjunction with the accompanying drawings, in which:
Figs. 1A and 1B are block diagrams of gain compensators in accordance with the present invention;
Fig. 2 is a block diagram of a gain compensator in accordance with the present invention;
Fig. 3 is a flow chart illustrating a gain compensating method in accordance with the present invention; and
Fig. 4 is a descriptive diagram of a signal band used in the present invention.

### Preferred Embodiment of the Invention

In conventional gain control devices, for a loop gain control, a level of a signal on a loop, or a signal out of the signal band, e.g., a tone signal is used.

Outdoor equipment should be designed with enough consideration of the temperature. For example, in case of a gain of an active element, e.g., an amplifier is low when the temperature is high, on the contrary, that of the amplifier is high when it is low. Accordingly, if the proof-temperature equipment is not established, a path gain of a total module is varied according to the temperature.

In a code division multiple access (CDMA) system, a signal level is varied according to subscribers or environments. The control of the path gain based on the signal level is not appropriate.

To solve the problem in the gain compensation method based on the signal level, a predetermined signal, e.g., a tone signal, is generated and a level of the predetermined signal is used for compensating the path gain. In this case, since the system should generate the predetermined signal, the system is complicated.

In the present invention, a thermal noise, which occurs in all systems, is used for controlling a gain of a loop. The thermal noise is varied in accordance with the temperature, however, the variation of the thermal noise is much smaller than that of the active element.

When there is no signal, the thermal noise is amplified, and then an output of the communication system is the amplified thermal noise. A level of the thermal noise is also varied in accordance with the temperature. In other words, since the thermal noise is varied due to variation of the active elements, the gain of the thermal noise can be controlled by measuring the level of the active element.

As mentioned above, since the level of the in-band signal is fluctuated according to the location of the signal source, the amplified thermal noise out of signal band is measured.

Before the temperature is varied, the out of signal band is filtered out by a bandpass filter and the thermal noise is fixed as a level. The fixed level is a reference value. Also, the reference value can be set in a theoretical method. Then, the gain is automatically adjusted based on the reference value.

Hereinafter, the embodiments of the present invention will be described in detail with reference to the accompanying drawings.

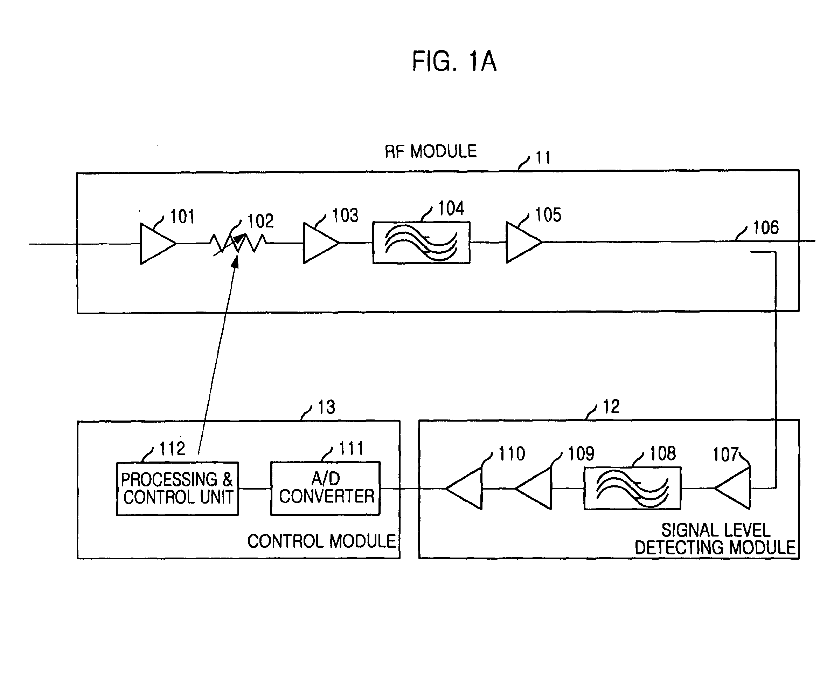

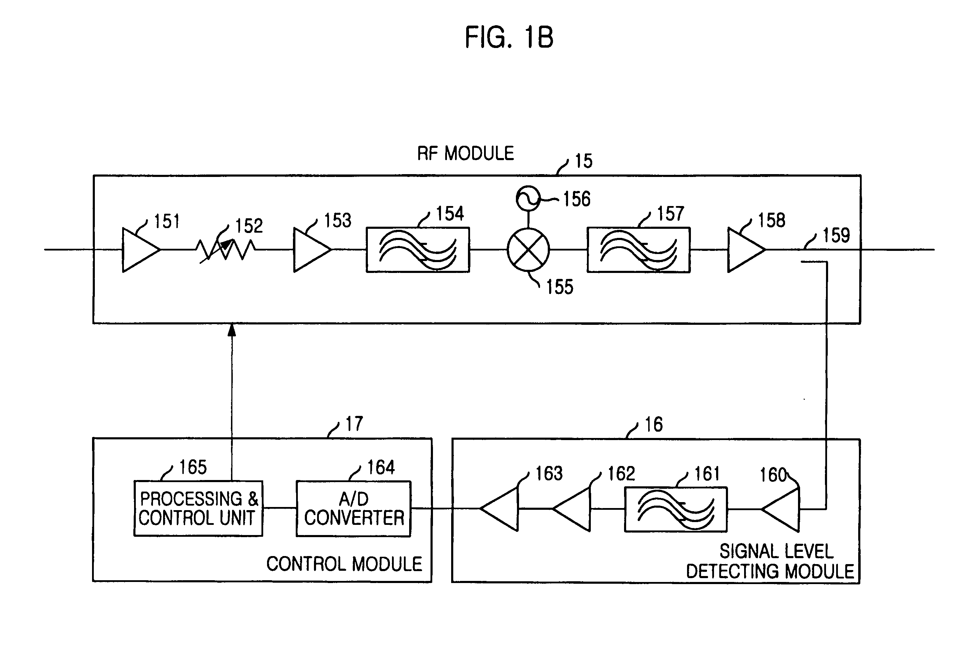

The present invention is applied to a direct transmission, a primary frequency conversion and a secondary frequency conversion. The direct transmission and the primary frequency conversion are illustrated in Figs. 1A and 1B respectively.

Figs. 1A and 1B are block diagrams of gain compensators in accordance with an embodiment of the present invention.

Each element in the gain compensator can be modified, added or deleted.

In this embodiment, the gain compensator applied to a repeater of the CDMA system will be described. The present invention can be applied to other systems of which the path gain should be kept as a constant value.

The gain compensator in case of the direct transmission is illustrated in Fig. 1A, and the gain compensator in case of the primary frequency conversion is illustrated in Fig. 1B.

The gain compensator in case of the direct transmission includes a radio frequency (RF) module 11, a signal level detecting module 12 and a control module 13.

The RF module 11 includes amplifiers 101, 103 and 105, a variable attenuator 102, a filter 104 and a divider 106. A variable gain amplifier is used instead of the variable attenuator 102, and a directional coupler is used instead of the divider 106. In other words, if the gain of the RF module 11 is kept as the constant value, elements of the RF module 11 can be added, deleted, changed, or modified.

The signal level detecting module 12 includes an amplifier 107, a filter 108, a logarithmic amplifier 109 and a level converter 110.

The control module 13 includes an analog/digital converter 111 and a processing & control unit 112.

The path gain is controlled based on the thermal noise from the amplifier 101 to the divider 106. Although the level of the output signal from the divider 106 is varied in accordance with the level of the input signal, the level of the thermal noise is in proportion to a noise figure and an amount of the gain of the total path.

For example, since the thermal noise in 1.23MHz band of the CDMA system is -113dBm/1.23MHz(-174dBm/Hz + 10*log(1.23MHz)), if the gain is 60dB and the noise figure is 5dB, an output noise power level is -48dBm/1.23MHz, which is used for keeping the path gain as a constant value. In other words, if the detected noise power is smaller than -48dBm, the path gain is increased by the decrement value, and the path gain is decreased by the increment value in vise versa.

The path gain of the out-of-band signal is smaller than that of the in-band signal due to the filtering of the signal. Accordingly, the noise, which is the out-of-band signal, is controlled with regard to the attenuated value when the level of the in-band signal is kept as the reference gain.

A low noise amplifier is generally used as the amplifier 107, and the filter 108 passes frequencies corresponding to the noise.

The logarithm amplifier 109 outputs an input power-to-output power value. In other words, the logarithm amplifier 109 receives the noise signal from the filter 108 and outputs a voltage level of the noise signal.

The level converter 110 amplifies the output power value received from the logarithm amplifier 109 by using an element amplifying the voltage level, e.g., an operation amplifier.

The voltage level from the level converter 110 is converted to a digital signal by the analog/digital (A/D) converter 111. The digital voltage level received from the A/D converter 111 is converted to a power level. Also, the digital voltage level can be converted to a gain level. The power level is compared with the reference level. If the power level becomes smaller than the reference level, which represents that the gain is decreased, an attenuation value of the variable attenuator 102 is reduced. On the contrary, if the power level becomes larger than the reference level, which represents that the gain is increased, the attenuation value of the variable attenuator 102 is increased. At that time, a variable gain amplifier can be used instead of the variable attenuator 102.

Referring to Fig. 1B, a gain compensator in case of the primary frequency conversion is illustrated.

In this embodiment, a RF module 15 is only different from the RF module 11, and the other elements are the same as those in the first embodiment as described with reference to Fig. 1A.

The gain compensator includes a RF module 15, a signal level detecting module 16 and a control module 17. Functions of each element in the signal level detecting module 16 and the control module 17 are the same as those in the signal level detecting module 12 and the control module 13 as mentioned above with reference to Fig. 1A.

The RF module 15 further includes a local oscillator 156, a frequency mixer 155 and a filter 157 in comparison with the RF module 11 of Fig. 1A.

When an input signal is received in the RF module 15, at first, the input signal is amplified by an amplifier 151. A variable attenuator 152 controls the amplified signal from the amplifier 151 based on a control signal received from the control module 17. The signal from the variable attenuator 152 is amplified, filtered out and mixed with a signal from the local oscillator 156 through the amplifier 153, the filter 154 and the mixer 155. Accordingly, the frequency of the input signal is converted. The frequency-converted signal is filtered out, amplified and divided by the filter 157, the amplifier 158 and the divider 159.

At this time, the elements in the RF module 15 generate thermal noise passed through the elements along with the input signal.

The signal outputted from the RF module 15 is processed in the signal level detecting module 16 and the control module 17 as the same way as the first embodiment. Therefore, detailed description about processing the signal outputted from the RF module 15 will skipped in this embodiment.

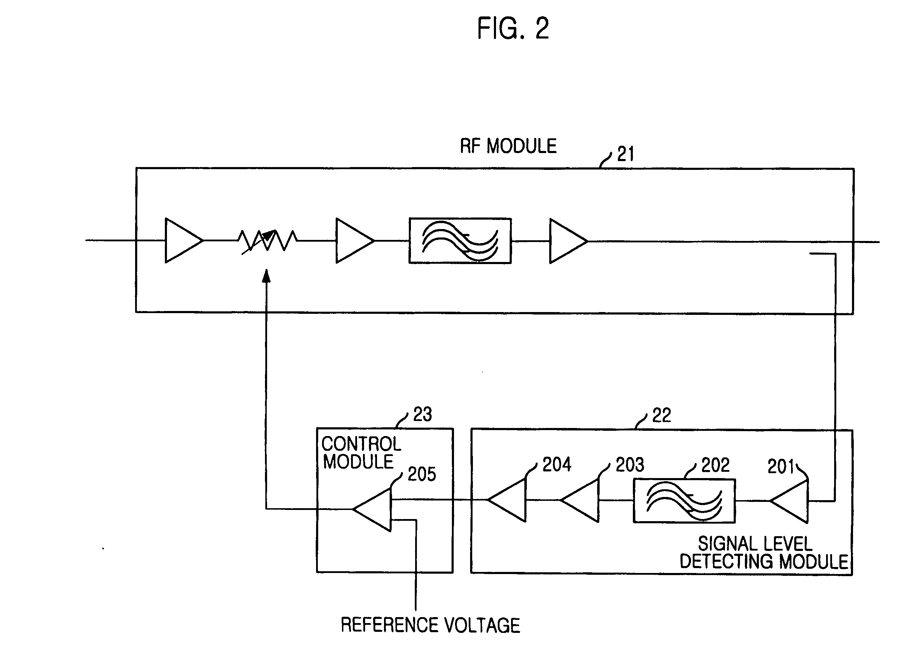

Fig. 2 is a block diagram of a gain compensator in accordance with another embodiment of the present invention.

Referring to Fig. 2, an analog gain compensator is illustrated. The analog gain compensator includes a RF module 21, a signal level detecting module 22 and a control module 23.

The RF module 21 and the signal level detecting module 22 have the same elements and functions as the RF module 11 and the signal level detecting module 12 as mentioned above with reference to Fig. 1A. Therefore, detailed description will be skipped in this embodiment.

The voltage level from the signal level detecting module 22 is compared with a reference level in a differential amplifier 205 of the control module 23. The differential amplifier 205 generates and transmits a control signal to the variable attenuator 152, thereby controlling the gain of the RF module 21.

At this time, the reference voltage is a voltage level measured in a level converter 204 when a total path gain is a value wanted to be kept.

The differential amplifier 205 can be utilized in the digital gain compensator of Figs. 1A and 1B. In this case, the differential amplifier 205 is located before the A/D converter 111. The differential amplifier compares the reference voltage with the output voltage of the signal level detecting module 122, the comparison result is converted to digital value in the A/D converter 111.

If a difference between the reference voltage with the output voltage of the signal level detecting module 22 is 0, the control and processing unit generates a gain control signal commanding that the gain of the RF module 21 is kept as the current value.

If the difference between the reference voltage with the output voltage of the signal level detecting module 22 is smaller than 0, the control and processing unit generates a gain control signal commanding that the gain of the RF module 21 is increased, so that the difference becomes 0.

If the difference between the reference voltage with the output voltage of the signal level detecting module 22 is lager than 0, the control and processing unit generates a gain control signal commanding that the gain of the RF module 21 is decreased, so that the difference becomes 0.

The A/D converter 111 receives a voltage value in a range from minus (-) voltage to positive (+) voltage. A sign of the difference value is decided in accordance with an input value of the differential amplifier 205. The reference voltage is set as a value having a predetermined difference from the measured voltage when the gain of the RF module 21 is kept as the constant value. For example, when the reference voltage is set as 50 and the measured voltage is 100, an output of the differential amplifier 205 is a reference value. The sign of the differential amplifier 205 is set based on the reference value.

In Figs. 1A to 2, the variable attenuator can be located at any place in the RF module, and keeps the gain of the RF module as the constant value based on the gain control signal from the control module.

In Figs. 1A to 2, the signal level detecting module is only described to detect a level of the signal directly transmitted thereto. However, the signal level detecting module can also detect a level of the signal which is primary frequency converted or secondary frequency converted signal by the mixer.

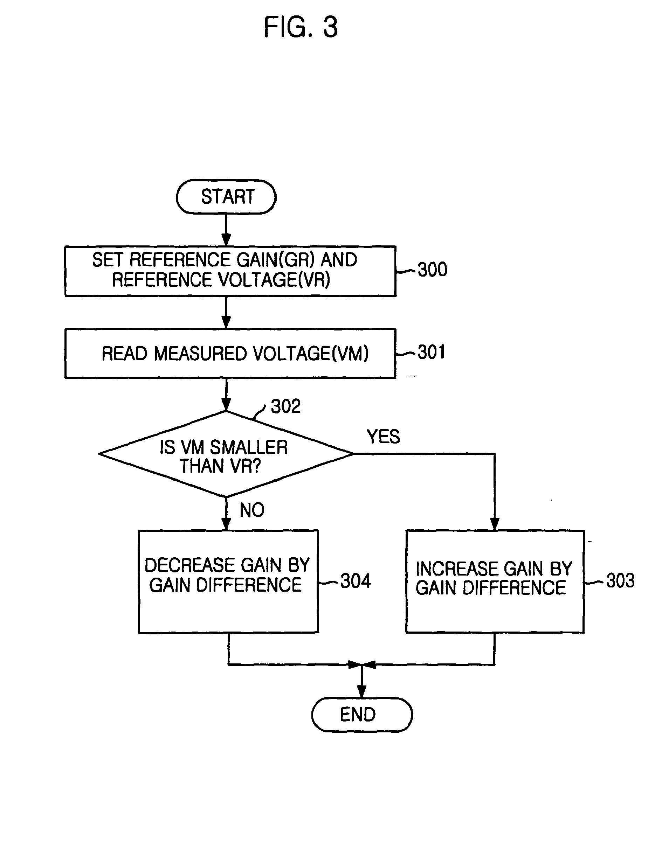

Fig. 3 is a flow chart illustrating a gain compensating method in accordance with the present invention.

First, a reference gain and a reference voltage are set in the control and processing unit 112 of the control module at step 300.

A measured voltage from the A/D converter 111 is compared with the reference voltage at steps 301 and 302.

If the measured voltage is smaller than the reference voltage, a voltage difference between the measured voltage and the reference voltage is converted to a gain difference Diff_G, thereby increasing the gain by the gain difference at step 303.

If the measured voltage is larger than the reference voltage, a voltage difference between the measured voltage and the reference voltage is converted to a gain difference Diff_G, thereby decreasing the gain by the gain difference at step 304. The gain difference value may be an analog or a digital value in accordance with the variable attenuator.

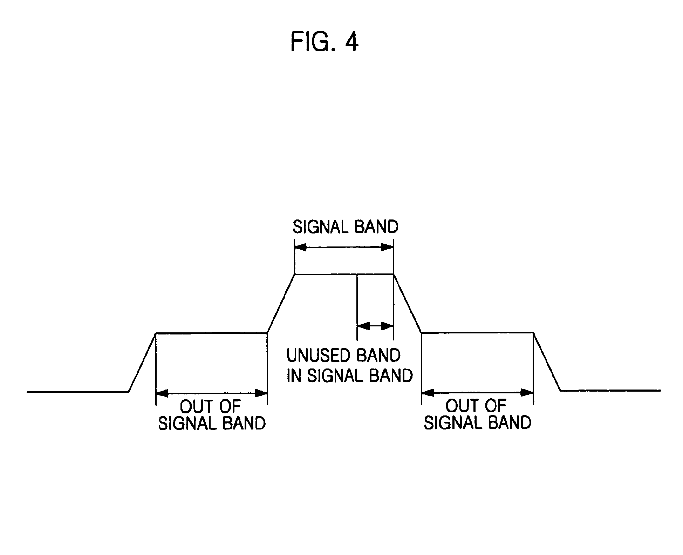

Fig. 4 is a descriptive diagram of noise bands used in the present invention.

Referring to Fig. 4, the noise band includes out of the signal band and unused band of the signal band. Since the level of the noise band is lower than that of the signal band due to a filtering, etc., the unused band of the signal band can be used for controlling the gain.

In this specification, for easy description, the gain compensator applied to the CDMA cellular communication is described. However, the gain compensator can be applied to the CDMA personal communication system (PCS), an international mobile telecommunication (IMT)-2000 system, a time division multiple access system and a frequency division multiple access system. In other words, the present invention can be applied to any equipment having an active element.

For detecting the noise level, the signal is up/down-converted and filtered out by the bandpass filter.

In the present invention, the noise signal, which is out of signal band or unused band of the signal band, is used for controlling the gain of the RF module, thereby being applied to any system.

The present invention can be widely applied to a system of which the path gain is necessary to be kept based on the noise signal on the path.

Although the preferred embodiments of the invention have been disclosed for illustrative purpose, those skilled in the art will appreciate that various modifications, additions and substitutions are possible, without departing from the scope of the invention as disclosed in the accompanying claims.

## Claims

1. An apparatus for compensating a gain of a radio communication system, said apparatus comprising:
a radio frequency (RF) processing means (11) for controlling a gain of a radio frequency (RF) signal based on a gain control signal; **characterized in that** it further comprises
a signal level detecting means (12) for detecting a level of a noise signal which is out of the RF signal band; and
a control means (13) for generating the gain control signal based on a comparison result between a reference level and the level of the detected noise signal.

2. Apparatus according to claim 1, wherein the control means (13) includes:
an analog/digital converting means (111) for converting the level of the noise signal, which is an analog value, to a digital value; and
a control and processing means (112) for comparing the reference level with the level of the detected noise signal, thereby generating the gain control signal.

3. Apparatus according to claim 1, wherein the control means (13) includes:
a differential amplifying means for obtaining a differential value between the level of the detected noise signal and the reference level;
an analog/digital converting means (111) for converting the differential value to a digital differential value; and
a control and processing means (112) for generating the gain control signal based on the digital differential value.

4. Apparatus according to claim 1, wherein the control means (13) includes:
a differential amplifying means for comparing the reference level with the level of the detected noise signal, thereby generating the gain control signal.

5. A method for compensating a gain of a ratio frequency (RF) signal of a radio communication system based on a noise signal, the method comprising the steps of:
a) setting (300) a reference level based on at least one of a reference gain and a reference voltage;
b) comparing (301, 302) a level of a noise signal, which is out of the RF signal band, with the reference level;
c) if the level of the noise signal is larger than the reference level, decreasing (304) a gain of a radio frequency processing module; and
d) if the level of the noise signal is smaller than the reference level, increasing (303) a gain of a radio frequency processing module.

6. A computer readable recording medium storing instructions for executing a method for compensating a gain of a radio frequency (RF) signal of communication system based on a noise signal, the method comprising the steps of :
a) setting (300) a reference level based on at least one of a reference gain and a reference voltage;
b) comparing (301, 302) a level of a noise signal, which is out of the RF signal band, with a reference level;
c) if the level of the noise signal is larger than the reference level, decreasing (304) a gain of a radio frequency processing module; and
d) if the level of the noise signal is smaller than the reference level, increasing (303) a gain of a radio frequency processing module.

## Patentansprüche

1. Vorrichtung zur Kompensierung einer Verstärkung eines Funkkommunikationssystems, wobei die Vorrichtung umfaßt:
ein Funkfrequenz-(RF-)Verarbeitungsmittel (11) zum Steuern einer Verstärkung eines Funkfrequenz-(RF-)Signals auf der Grundlage eines Verstärkungssteuerungssignals;
**dadurch gekennzeichnet, daß** sie ferner umfaßt:
ein Signalpegelermittlungsmittel (12) zum Ermitteln eines Pegels eines Rauschsignals, das außerhalb des RF-Signalbandes liegt; und
ein Steuerungsmittel (13) zum Erzeugen eines Verstärkungssteuerungssignals auf der Grundlage eines Vergleichsergebnisses zwischen einem Referenzpegel und dem Pegel des ermittelten Rauschsignals.

2. Vorrichtung nach Anspruch 1, wobei die Steuerungseinrichtung (13) aufweist:
ein Analog-Digital-Umsetzungsmittel (111) zum Umsetzen des Pegels des Rauschsignals, das ein analoger Wert ist, in einen digitalen Wert; und
ein Steuerungs- und Verarbeitungsmittel (112) zum Vergleichen des Referenzpegels mit dem Pegel des ermittelten Rauschsignals, wodurch das Verstärkungssteuerungssignal erzeugt wird.

3. Vorrichtung nach Anspruch 1, wobei das Steuerungsmittel (13) aufweist:
ein Differenzverstärkungsmittel zum Gewinnen eines Differenzwertes zwischen dem Pegel des ermittelten Rauschsignals und dem Referenzpegel;
ein Analog-Digital-Umwandlungsmittel (111) zum Umwandeln des Differenzwertes in einen digitalen Differenzwert; und
ein Steuerungs- und Verarbeitungsmittel (112) zum Erzeugen eines Verstärkungssteuerungssignals auf der Grundlage des digitalen Differenzwertes.

4. Vorrichtung nach Anspruch 1, wobei das Steuerungsmittel (13) aufweist:
ein Differenzverstärkungsmittel zum Vergleichen des Referenzpegels mit dem Pegel des ermittelten Rauschsignals, wodurch das Verstärkungssteuerungssignal erzeugt wird.

5. Verfahren zur Kompensierung einer Verstärkung eines Funkfrequenz-(RF-)Signals eines Funkkommunikationssystems auf der Grundlage eines Rauschsignals, wobei das Verfahren die folgenden Schritte umfaßt:
a) Einstellen (300) eines Referenzpegels auf der Grundlage mindestens eines, nämlich einer Referenzverstärkung und/oder einer Referenzspannung;
b) Vergleichen (301, 302) eines Pegels eines Rauschsignals, das außerhalb des RF-Signalbandes liegt, mit dem Referenzpegel;
c) wenn der Pegel des Rauschsignals größer ist als der Referenzpegel, Verringern (304) einer Verstärkung eines Funkfrequenzverarbeitungsmoduls; und
d) wenn der Pegel des Rauschsignals kleiner ist als der Referenzpegel, Erhöhen (303) einer Verstärkung eines Funkfrequenzverarbeitungsmoduls.

6. Computerlesbares Aufzeichnungsmedium, das Anweisungen zur Ausführung eines Verfahrens zur Kompensierung einer Verstärkung eines Funkfrequenz-(RF-)Signals eines Kommunikationssystems auf der Grundlage eines Rauschsignals ausführt, wobei das Verfahren die folgenden Schritte umfaßt:
a) Einstellen (300) eines Referenzpegels auf der Grundlage mindestens eines, nämlich einer Referenzverstärkung und/oder einer Referenzspannung;
b) Vergleichen (301, 302) eines Pegels eines Rauschsignals, das außerhalb des RF-Signalbandes liegt, mit einem Referenzpegel;
c) wenn der Pegel des Rauschsignals größer ist als der Referenzpegel, Verringern (304) einer Verstärkung eines Funkfrequenzverarbeitungsmoduls; und
d) wenn der Pegel des Rauschsignals kleiner ist als der Referenzpegel, Erhöhen (303) einer Verstärkung eines Funkfrequenzverarbeitungsmoduls.

## Revendications

1. Appareil pour compenser un gain d'un système de communication radio, ledit appareil comprenant:
un moyen de traitement radiofréquence (RF) (11) pour commander un gain d'un signal radiofréquence (RF) sur la base d'un signal de commande de gain,
**caractérisé en ce qu'**il comprend en outre:
un moyen de détection de niveau de signal (12) pour détecter un niveau d'un signal de bruit qui est en dehors de la bande de signal RF; et
un moyen de commande (13) pour générer le signal de commande de gain sur la base d'un résultat de comparaison entre un niveau de référence et le niveau du signal de bruit détecté.

2. Appareil selon la revendication 1, dans lequel le moyen de commande (13) inclut:
un moyen de conversion analogique/numérique (111) pour convertir le niveau du signal de bruit qui est une valeur analogique selon une valeur numérique; et
un moyen de commande et de traitement (112) pour comparer le niveau de référence avec le niveau du signal de bruit détecté, d'où ainsi la génération du signal de commande de gain.

3. Appareil selon la revendication 1, dans lequel le moyen de commande (13) inclut:
un moyen d'amplification différentielle pour obtenir une valeur différentielle entre le niveau du signal de bruit détecté et le niveau de référence;
un moyen de conversion analogique/numérique (111) pour convertir la valeur différentielle selon une valeur différentielle numérique; et
un moyen de commande et de traitement (112) pour générer le signal de commande de gain sur la base de la valeur différentielle numérique.

4. Appareil selon la revendication 1, dans lequel le moyen de commande (13) inclut:
un moyen d'amplification différentielle pour comparer le niveau de référence avec le niveau du signal de bruit détecté, d'où ainsi la génération du signal de commande de gain.

5. Procédé pour compenser un gain d'un signal radiofréquence (RF) d'un système de communication radio sur la base d'un signal de bruit, le procédé comprenant les étapes de:
a) établissement (300) d'un niveau de référence sur la base d'au moins un élément pris parmi un gain de référence et une tension de référence;
b) comparaison (301, 302) d'un niveau d'un signal de bruit qui est en dehors de la bande de signal RF avec le niveau de référence;
c) si le niveau du signal de bruit est supérieur au niveau de référence, diminution (304) d'un gain d'un module de traitement radiofréquence; et
d) si le niveau du signal de bruit est inférieur au niveau de référence, augmentation (303) d'un gain d'un module de traitement radiofréquence.

6. Support d'enregistrement lisible par ordinateur qui stocke des instructions pour exécuter un procédé pour compenser un gain d'un signal radiofréquence (RF) de système de communication sur la base d'un signal de bruit, le procédé comprenant les étapes de:
a) établissement (300) d'un niveau de référence sur la base d'au moins un élément pris parmi un gain de référence et une tension de référence;
b) comparaison (301, 302) d'un niveau d'un signal de bruit qui est en dehors de la bande de signal RF avec un niveau de référence;
c) si le niveau du signal de bruit est supérieur au niveau de référence, diminution (304) d'un gain d'un module de traitement radiofréquence; et
d) si le niveau du signal de bruit est inférieur au niveau de référence, augmentation (303) d'un gain d'un module de traitement radiofréquence.
